# EUROPEAN PATENT SPECIFICATION

(11) **EP 2 461 153 B1**
(45) Date of publication and mention of the grant of the patent: **02.10.2019**
(21) Application number: 10804341.5
(22) Date of filing: 23.07.2010
(51) Int. Cl.: G01N 21/27, G01N 15/14, G01N 21/47

(54) **PARTICLE IMAGE ANALYSIS DEVICE**
VORRICHTUNG ZUR PARTIKELBILDANALYSE
DISPOSITIF D'ANALYSE D'IMAGE DE PARTICULES

(30) Priority: 29.07.2009 JP 2009175994
(43) Date of publication of application: 06.06.2012
(73) Proprietor: Hitachi High-Technologies Corporation, Tokyo 105-8717 (JP)
(72) Inventor: SUZUKI Akiko, Hitachinaka-shi Ibaraki 312-8504 (JP); OOWADA Norio, Hitachinaka-shi Ibaraki 312-8504 (JP); TAKI Miki, Hitachinaka-shi Ibaraki 312-8504 (JP); MITSUYAMA Satoshi, Kokubunji-shi Tokyo 185-8601 (JP); MANRI Chihiro, Kokubunji-shi Tokyo 185-8601 (JP)
(74) Representative: Strehl Schübel-Hopf & Partner
(86) International application number: PCT/JP2010/062468
(87) International publication number: WO 2011/013595

(56) References cited:
- EP-A2- 0 660 103
- JP-A- 7 262 355
- JP-A- 2000 206 027
- JP-A- 2000 206 027
- JP-A- 2004 279 032
- US-A- 5 768 412

## Description

### Technical Field

The present invention relates to an apparatus that captures an image of a liquid containing particles, and classifies and counts the particles. The present invention more particularly relates to a method for detecting an abnormal state such as a shortage of a sample, a shortage of a staining solution, a shortage of a sheath liquid, or an abnormality of a flow path system of the apparatus, and an apparatus that uses the method.

### Background Art

For example, as disclosed in Patent Document 1 (JP-63-94156-A) and Patent Document 2 (JP-4-72544-A), there are flow type particle image analysis apparatuses that use a sheath liquid as an outer layer, and pass a sample liquid through a flow cell which makes it an extremely flat flow, to thereby classify and count particles contained in the sample. Specifically, these flow type particle image analysis apparatuses classify and count particles contained in the sample by using a video camera or the like to capture an image of the particles moving in the flow cell, and performing image processing on the captured still image. In these conventional flow type particle image analysis apparatuses for measuring urinary sediment, when an abnormality occurs during operation of the apparatus, an alarm is sounded, and an alarm code and an alarm name are displayed on a routine monitor screen. An operator takes countermeasures according to the alarm code and the alarm name. In addition, as a logic to detect an abnormality of a sample, data flags such as a high density flag, a deformed erythrocyte flag, and a bilirubin flag exist. An image of a sample to which a flag is added is unconditionally transmitted to an image reviewing unit, wherein the operator visually conducts reviewing. Addition of the flag allows the apparatus to have a function such that provides correct measurement results for samples that cannot be automatically classified by the apparatus (Non-Patent Document 1).

### Prior Art Documents

### Patent Document

Patent Document 1: JP-63-94156-A
Patent Document 2: JP-4-72544-A

### Non-patent Document

Non-Patent Document 1: (Hitachi) 6800 automatic urine analyzer, Instruction manual, the 7th edition, P.3-22 to 23, P.6-1 to 6-15.

### Summary of the Invention

### Problem to be Solved by the Invention

The conventional flow type particle image analysis apparatuses are not such that is capable of detecting all of an abnormality caused by a human error of an operator, an abnormality of a sample, and an abnormality of the apparatus.

For example, the flow type particle image analysis apparatus disclosed in Patent Document 1 cannot determine abnormal states caused by a human error such as leaving behind the sample, a shortage of the sample, or a shortage of a reagent, or abnormal states in a flow path system or an optical system of the apparatus. Thus, the operator may not notice a measurement error, and an incorrect result may be output. In addition, since an abnormality determination process is conducted separately from a normal measurement, the operator finds abnormality upon reviewing measurement results, after completion of all measurements, or upon finding abnormality of the apparatus by inspecting it. Thus, detection of the abnormality is delayed. The samples are needed to be measured again, and reporting of an inspection result is therefore delayed. This causes a significant reduction in the efficiency of an inspection room.

As another method for detecting abnormality, there is a method for detecting errors such as leaving behind a sample, a shortage of the sample, a shortage of a reagent and the like. In this method, a sensor is placed at a sample vessel or at a location of the reagent, to thereby detect a liquid surface of the sample and reagent.

However, in this method, the configuration of an apparatus is more complicated compared to conventional apparatuses, and the apparatus cannot detect an abnormality relating to a flow path extending to a measuring unit.

JP-2000-206027-A discloses a particle image device with the features in the preamble of present claim 1.

An object of the present invention is to, without significantly changing a configuration from that of the conventional apparatuses, determine a shortage of a sample, a shortage of a sheath liquid, a shortage of a staining solution, and an abnormality in a flow path system of an apparatus, to thereby prevent an incorrect result from being output. In order to achieve this object, an analysis of a background region (not including target particles), which was extracted from a captured image acquired upon measuring including the target particles, is conducted simultaneously with a normal particle image analysis.

### Means for Solving the Problem

The present invention that is intended to accomplish the object has the features defined in present claim 1. The dependent claims relate to preferred embodiments.

The particle image analysis apparatus may be of any type as long as the apparatus can capture an image of a liquid sample containing particles. For example, the particle image analysis apparatus may be such that includes a flow cell which a sample containing stained particles and sheath liquid pass through, and captures still images of the sample from the outside of the flow cell by a camera. Images may also be captured using a microscope.

The abnormality determining unit may perform the abnormality determination process on the sample according to the ratio of the number of images determined as abnormalities to the number of all captured images, or may perform according to the number of the images determined as abnormalities.

### Effects of the Invention

According to the present invention, the flow type particle image analysis apparatus can determine the occurrence of abnormalities such as a shortage of a sample, a shortage of a staining solution, a shortage of a sheath liquid and an abnormality of the apparatus, in other words determine whether these abnormalities exist or not, simultaneously with normal analysis. This allows special effort and cost for detecting abnormalities in a measurement to be saved, leads to a reduction of running cost. In addition, various types of abnormalities can be detected without overlooking, and an operator can immediately handle the abnormal state when an abnormality is detected. Thus, highly reliable data can be provided for clinical use.

Another effect of the present invention is that, without adding a special mechanism and having a complicated configuration, a flow type particle image analysis apparatus which identifies a cause of a measurement abnormality can be provided. Thus, the apparatus can be inexpensive and contributes to improvement of efficiency of an inspection room and reliability.

### Brief Description of the Drawings

Fig. 1 is a configuration diagram illustrating an automatic urinary sediment analysis apparatus according to an embodiment of the present invention.
Fig. 2 is a flowchart of processing of a captured image.
Fig. 3 is a diagram showing background error images.
Fig. 4 is a histogram of an air bubble image.
Fig. 5 is a histogram of a sample image measured in a normal state.
Fig. 6 is a flowchart of a process according to the first embodiment of the present invention.
Fig. 7 is a diagram illustrating distributions of background levels of a background region of an image.
Fig. 8 is a flowchart of a process according to a second embodiment of the present invention.
Fig. 9 is a histogram of a sample image obtained when the amount of a sheath liquid is insufficient.
Fig. 10 is a flowchart of a process according to a third embodiment of the present invention.

### Mode for Carrying out the Invention

The present invention is hereinafter described in detail referring to embodiments.

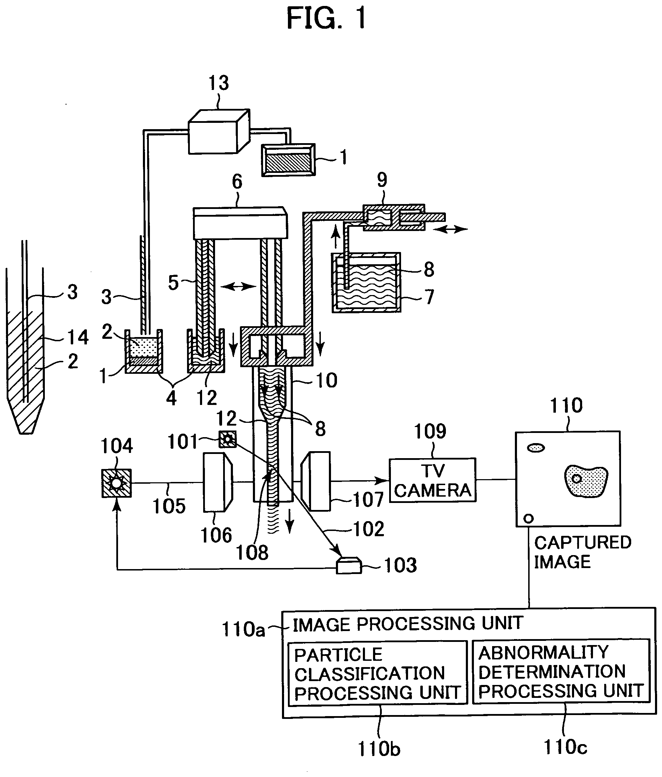

Fig. 1 is a configuration diagram mainly illustrating a flow cell of a flow type particle image analysis apparatus according to a first embodiment of the present invention. The flow type particle image analysis apparatus includes a flow cell 10, a particle detector 103 and an imaging unit 109. Measurement operation of the flow type particle image analysis apparatus is described below with reference to Fig. 1.

Samples mentioned here are assumed to be biological samples containing particles such as urine, blood or the like. The sample is supplied to the apparatus being stored in a test tube 14. A sample nozzle 3 sucks the sample stored in the test tube 14 and discharges it into a staining solution tank 4 containing a staining solution 1 stored therein. The staining solution 1 stains the target particles. After a certain period of time, a direct sample nozzle 5 of a direct sample mechanism 6 sucks a stained sample 12 stored in the staining solution tank 4, and injects it into the flow cell 10. A syringe mechanism 9 injects a sheath liquid 8 stored in a sheath liquid container 7 into the flow cell 10, and at the same time, the injection of the stained sample 12 into the flow cell 10, in such a manner as to sandwich the stained sample 12 with the two. In the flow cell 10, a flow ratio of the sample and the sheath liquid is adjusted, so that detection sensitivity is adjusted to be optimum by varying the thickness of the stained sample in a measurement flow path, without changing the configuration of a mechanism system.

Upon measurement, in order to detect whether or not the target particles pass through a particle detection region 108 which serves as a measurement section, laser light is emitted from a laser light source 101 to irradiate the particle detection region 108. The particle detector 103 receives scattered light 102 that has been generated when the particles contained in the stained sample 12 passed through the particle detection region 108. The particle detector 103 detects, in accordance with a particle determination logic for determining the existence of particles, whether or not the target particles have passed through the particle detection region 108.

After the particle detector 103 detects that the target particles have passed, a flash lamp 104 emits light so that an image of the particles, contained in the stained sample 12 flowing in the flow cell, is enlarged through a microscope condenser lens 106 and a microscope objective lens 107. The enlarged image 110 is captured by the imaging unit 109 such as a TV camera.

The captured image 110 is processed by an image processing unit 110a. The image processing unit 110a includes a particle classification processing unit 110b, which classifies and counts the imaged particles, and an abnormality determination processing unit 110c, which determinates whether or not the imaged sample has an abnormality. The present invention described below especially relates to the abnormality determination processing unit 110c.

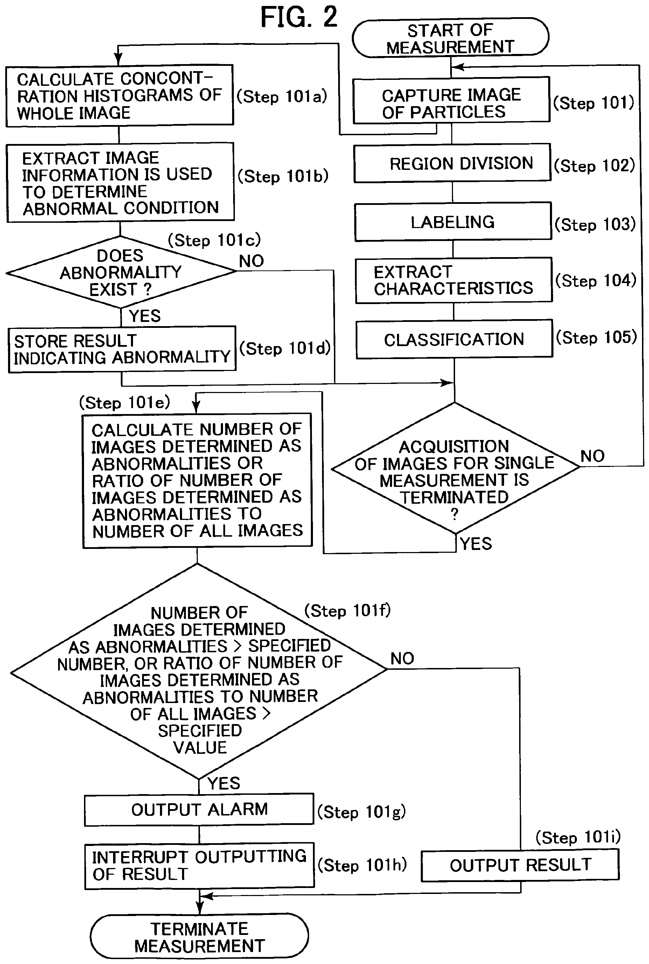

Next, a process flow of the particle classification processing unit 110b and the abnormality determination processing unit 110c is described with reference to Fig. 2.

First, a whole image is captured by the imaging unit 109 (step 101). The whole image is separated into target particle components and the other region (background). This is called a region separation (step S102). Next, the target components separated from the background are numbered and distinguished. This is called labeling (step S103). After that, characteristic parameters such as information of size, shape and color are extracted (step 104), and based on these parameters, types of the target components are determined (classified) using an identification algorithm (step 105). The image of the classified particles is stored as an image for reviewing. These are the process flow of particle classification processing unit 110b.

Next, a measurement process flow of the abnormality determination process unit 110c is described. The process of the abnormality determination process unit 110c is conducted simultaneously with the process of the particle classification processing unit 110b. First, after the whole image is captured in step 101, density histograms of R, G, B colors are respectively extracted (step 101a). Next, image information is extracted (step 101b) in order to determine whether or not the extracted histograms indicate an abnormal state such as a shortage of the sample prepared in advance, a shortage of the staining solution, a shortage of the sheath liquid or an abnormality of the apparatus. Step 101b varies depending on the type of the abnormality to be detected.

The extracted image information is compared with an abnormal value determination condition to determine the existence of an abnormality (step 101c). The determination of abnormality may be detected using a specific discriminant function. When it is determined that an abnormality exists, it is possible that the sample has been measured in the presence of an abnormality such as a shortage of the sample, a shortage of the staining solution, or a shortage of the sheath liquid. The result is stored (step 101d) and the process for the image is terminated. After the particle classification process and the abnormality determination process are completed for all images of one sample, information of abnormal images stored in step 101d is confirmed, and the number of images determined as abnormalities, or the ratio of the number of images determined as abnormalities to the number of all images of the sample is calculated (step 101e). When the number of images determined as the abnormalities, or the ratio of the number of images determined as abnormalities to the number of all images of the sample exceeds a specified value, the sample is determined as an abnormal sample (step 101f), and an alarm is output (step 101g). When the alarm is output, depending on the type of the abnormality, the apparatus is stopped and the output of the measurement result is interrupted (step 101h). On the other hand, when an abnormality is not detected during the process flow, the result is output and the measurement terminates (step 101i).

### First Embodiment

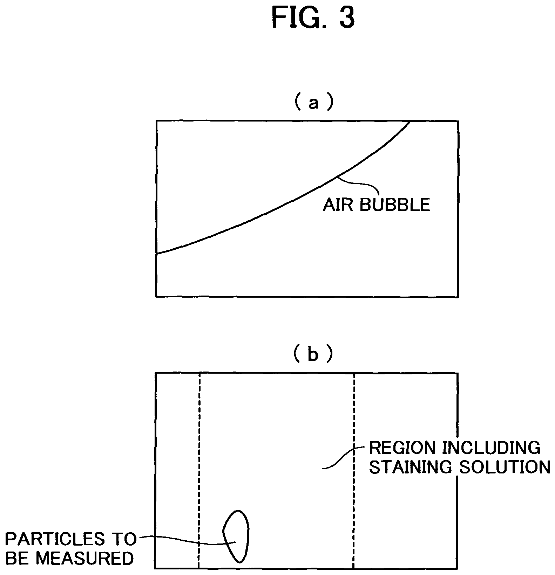

A method for determining a shortage of a sample using the present invention is described with reference to Figs. 3 to 6.

In the case where an empty test tube set in the apparatus with no sample is measured, or when air is discharged into the flow cell due to suction failure for apparatus abnormality, an image of an air bubble such as shown in Fig. 3(a) is frequently captured by the TV camera 109, etc. The morphological characteristics of air bubble is significantly different from that of the target components, which are particles contained in urine or blood. When the air bubble exists, it is desirable to detect and inform an operator that the sample set is abnormal or an abnormality has occurred in the apparatus.

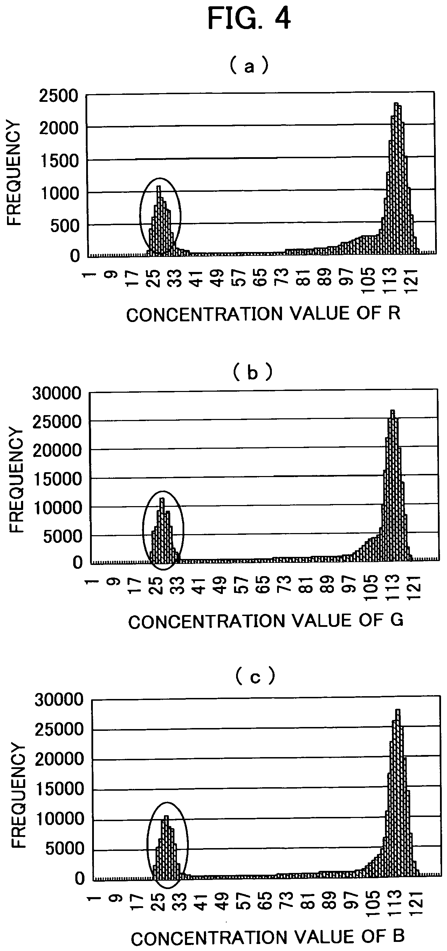

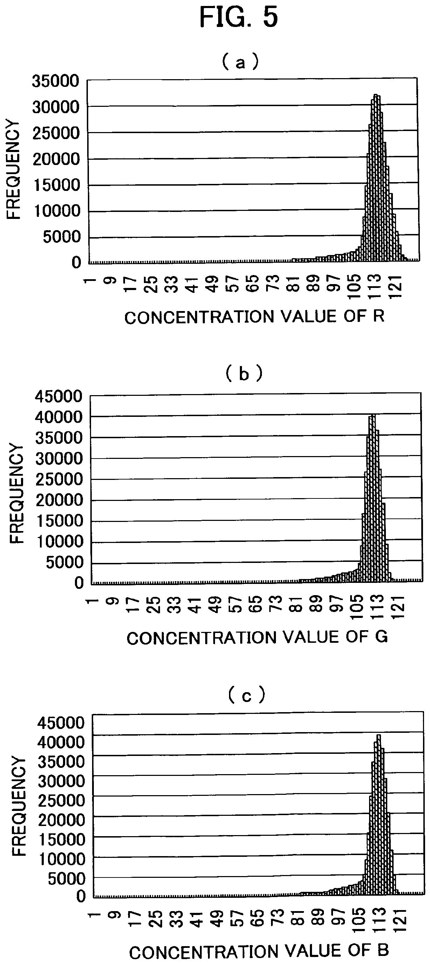

Density histograms of R, G, B color signals of a still image, obtained by measuring the sample in a normal state (Figs. 5(a) to 5(c)), shows no peak other than peaks of density of the background. Meanwhile, in an image including an air bubble (Figs. 4(a) to 4(c)), peaks other than the peaks of the density of the background appear in low-density regions. The peaks are caused by the air bubble included in the image. The abnormality determination process unit 110c analyzes the density histograms of R, G, B of the whole image, and if the existence of peak relating to an air bubble is determined, whether or not the amount of the sample is insufficient, or whether or not the apparatus is in an abnormal state can be determined.

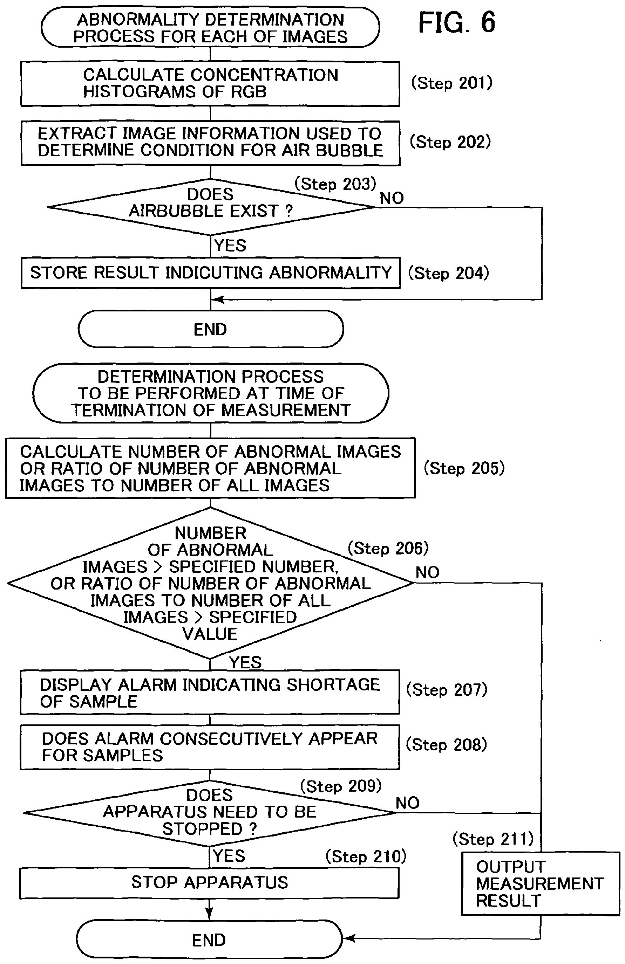

Specific process steps of the abnormality determination process are described with reference to Fig. 6. First, a background region, that is a region not including the part of the target particles, is separated from a whole image including the target particles, and density histograms of R, G, B signals are calculated (step 201). Next, peak values that indicate the image information of regions with density lower than 40, and represent characteristics of an air bubble, are extracted from the calculated density histograms (step 202). When the extracted image information is out of a normal value range, the image is determined as an abnormal image having an air bubble therein (step 203). Another method for extracting an image having an air bubble therein is such that, first conducting primal extraction by extracting peaks of which frequency is 100 or higher in a region of density value 60 or lower, and then conducting second extraction by extracting peaks which indicates density value 40 or lower from the peaks extracted in the primal extraction. Conducting extraction in two steps allows extraction of an image having an air bubble to be more accurate. If an abnormality is detected from the image, the result is temporarily stored, and the abnormality determination process for the image terminates (step 204).

At the time the particle classification process and the abnormality determination process are completed for all images of one sample, the number of images determined as abnormalities and stored is counted (step 205). When the number of images determined as abnormalities and stored is equal to or larger than a specified number (10 images in the present embodiment), it is judged that the amount of the imaged sample is insufficient (step 206). In step 206, the ratio of the number of images determined as abnormalities to the number of all acquired images may be calculated, to thereby judge the insufficiency of the amount of the sample, depending on whether or not the ratio is equal to or larger than a specified value.

When the abnormality judgment process unit judges that the amount of the sample is insufficient, the apparatus outputs an alarm to alert the operator, and also registers a flag indicating the shortage of the sample in the result of insufficient sample (step 207). When a plurality of samples judged to be short in amount appear successively (step 208), there is a high possibility that an abnormality has occurred in hardware of the apparatus, and abnormality determination process of whether or not stopping the apparatus is conducted (step 209). When the alarm is successively detected for times equal to or more than a specified number of times, the apparatus is stopped (step 210) so that loss of a sample and reagents can be prevented. When shortage of the sample is not determined in all of the steps 201 to 210, the measurement result is output (step 211).

### Second Embodiment

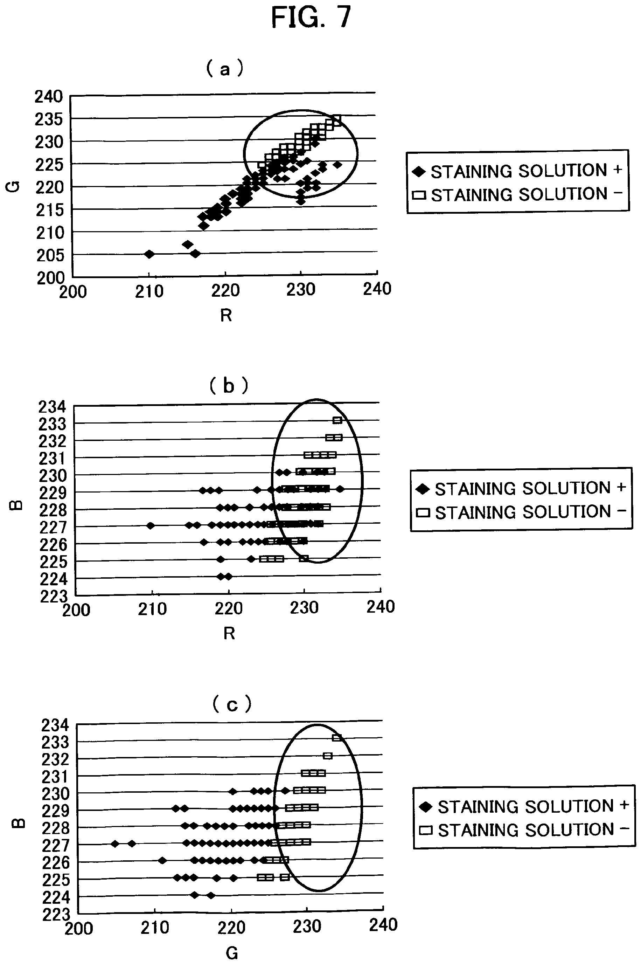

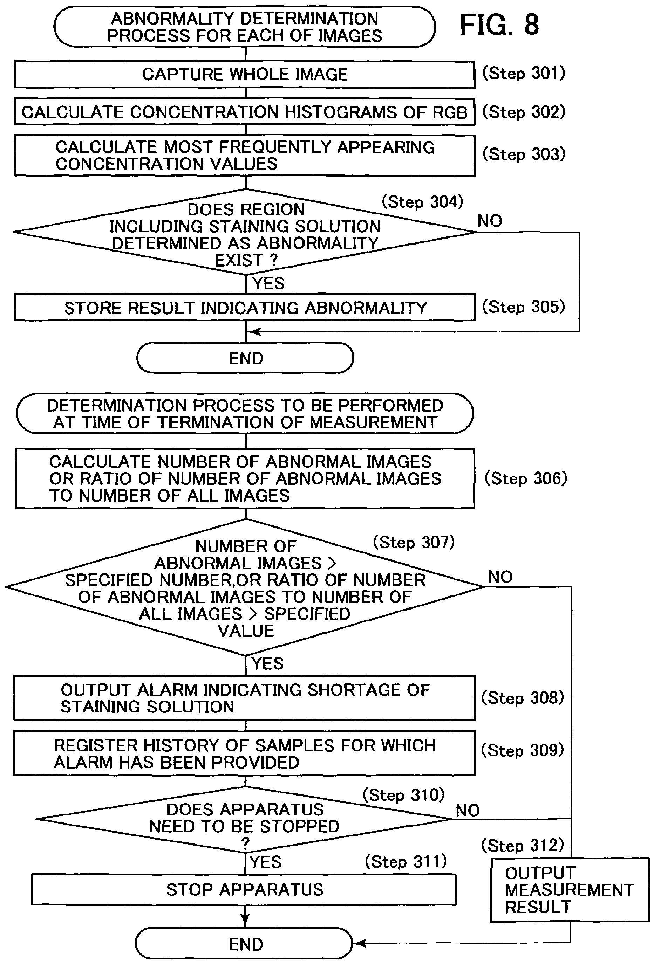

A method for determining a sample that is short of staining solution using the present invention is described with reference to Figs. 7 and 8.

The image shown in Fig. 3(b) is an image of a sample having the staining solution added thereto, taken by the TV camera 109. A region that is surrounded by a broken line is the target region, and includes particles and the staining solution. The abnormality determination process unit 110c analyzes distributions of background levels of the background region, that is the region not including the part of the target particles, extracted from the whole image including the target particles, and determines the condition of staining solution addition to the sample.

Fig. 7 is graph showing distributions of background levels of the background regions of the captured images, about R-G, G-B, B-R, respectively. Samples to which the staining solution is not added are plotted with white squares, and samples to which the staining solution is added are plotted with black diamonds. The samples to which the staining solution is not added concentrate in ranges surrounded by frames, while the samples to which the staining solution is added extend in large ranges. Thus, the distribution of the background levels varies according to the addition of the staining solution. Based on changes in the background levels, a discriminant function for determining shortage of the staining solution added to the samples is defined as the following formula: 0.1886Rp - 0.482Gp + 0.225Bp + 13.996 < 0. Rp, Gp, Bp, that are to be substituted into the discriminant function are calculated according to the peak values (most frequent density values) of the histograms. When a sample satisfies the aforementioned discriminant function, the amount of the staining solution is determined to be insufficient.

Next, specific process steps of determining shortage of the staining solution are described with reference to Fig. 8. First, a whole image of a sample is captured (step 301), and density histograms of R, G, B signals are calculated from the captured whole image (step 302). Next, the most frequent density values (Rp, Gp, Bp) of the R, G, B signals are calculated (step 303). These calculated values are substituted into the discriminant function 0.1886Rp - 0.482Gp + 0.225Bp + 13.996 < 0. When this condition is satisfied, it is determined that the staining solution does not exist in the background region of a particle detection region, that is, determined that there is an abnormality in staining solution (step 304). The image that is determined to have abnormality in the staining solution is temporarily stored (step 305), and the abnormality determination process for the image is terminated. These process steps are performed to all images (to be measured) of the sample.

At the time the particle classification process and the abnormality determination process are completed for all of the images obtained from one sample, the ratio of the images determined to have abnormality in staining solution to all of the images of the sample is calculated (step 306). When the ratio of the images determined to have abnormality in staining solution exceeds a specified value (step 307), the abnormality judgment process unit of the apparatus outputs an alarm indicating shortage of the staining solution to alert the operator for confirmation etc., and registers a flag indicating that the sample is short of staining solution in the measurement result of the sample (step 308). As a ratio of abnormal images, for example, the ratio of the number of abnormal images to the number of all images measured in one sample may be 50% or higher. Another method is such that determining the amount of staining solution added to the sample insufficient when the number of the abnormal images detected is equal to or larger than a specified number.

When the alarm that indicates shortage of staining solution in the sample is successively detected for a plurality of times (step 309), there is a high possibility that an abnormality has occurred in the hardware or the like, and whether or not the apparatus needs to be stopped is determined (step 310). When the alarm is successively detected for a specified number of times or more, the apparatus is stopped (step 311) so that loss of the sample and reagents can be prevented. When no abnormality in staining solution is determined, the measurement result is output (step 312).

The second embodiment describes a case that a region in which the sample flows is sufficiently broad relative to an image capturing region of the TV camera. When the region in which the sample flows is narrow, and the peak value of the region sample flows in is lower than the peak value of a region in which the sample does not exist (background region), the existence of staining solution can be determined based on the average value and the standard deviation of the background region.

### Third Embodiment

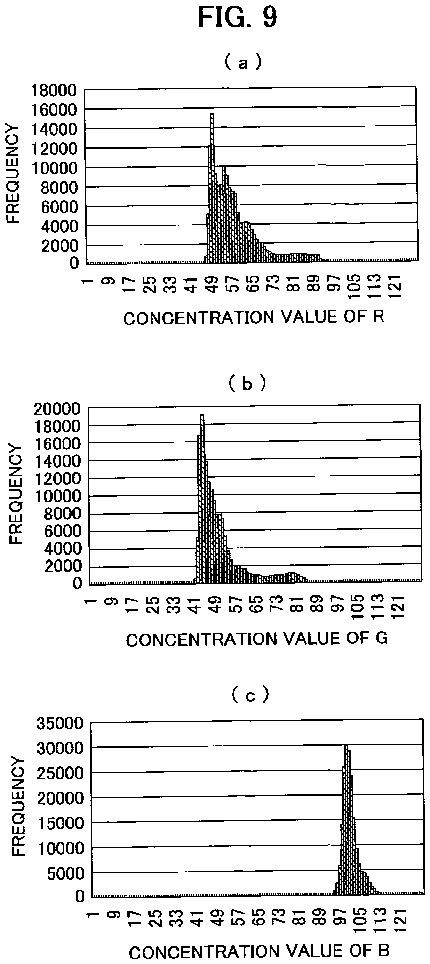

A method for determining a shortage of the sheath liquid using the present invention is described with reference to Figs. 9 to 10.

When the amount of the sheath liquid is insufficient, the sheath liquid that forms the sample into a flat shape does not sufficiently flow in the flow cell. Therefore, a liquid that flows in the flow cell immediately after the start of measurement is mainly the sample having the staining solution added thereto, and, compared to a normal state, a dark bluish-purple image of the staining solution is captured. Meanwhile, after the whole sample passes through the flow cell, an image showing nothing in the flow cell is captured. In such image measured by the TV camera 109 immediately after the start of measurement, among R, G, B histograms obtained therefrom, the peaks of the most frequent density values of R and G histograms (Rp, Gp) appear in the range of density values 40 to 60, low to intermediate values compared to that of histograms obtained in a normal measurement (refer to Figs. 9(a) and 9(b)). On the other hand, the peak of the most frequent density value Bp calculated from the B histogram shows little difference from a normal state (refer to Fig. 9(c)). The abnormality determination process unit 110c analyzes tendencies of the R, G, B histograms of the whole image and determines whether or not the amount of the sheath liquid is insufficient.

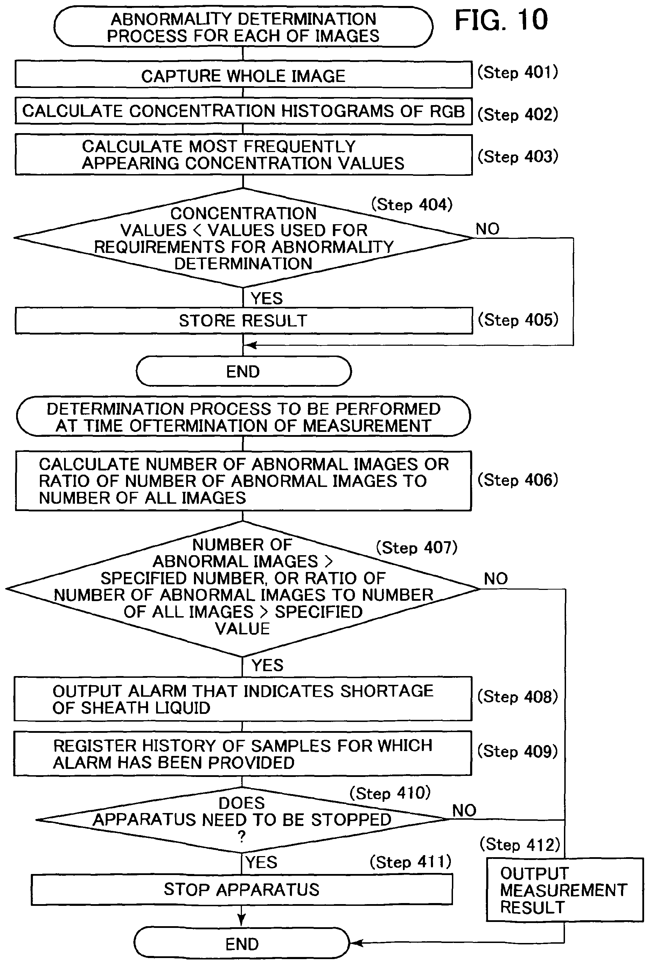

Next, specific process steps for judging an abnormality are described with reference to Fig. 10. First, a whole image is captured (step 401), and density histograms of R, G, B signals are calculated from the captured whole image (step 402). Next, the most frequent density values (Rp, Gp, Bp) of the R, G, B signals are calculated (step 403) .

When each of the density values satisfy the following conditions for abnormality determination, the image is determined to be short of sheath liquid (step 404).

Rp < Rth
Gp < Gth
Bp < Bth
When the amount of sheath liquid is insufficient, especially the values of Rp and Gp change significantly. Thus, if Rp and Gp are used as main discriminant functions, an abnormality can be reliably detected. In addition, if Bp is also added, the cause of abnormality can be accurately determined as shortage of the sheath liquid. In the case of Fig. 9, if Rth, Gth, Bth are respectively set as Rth = 60, Gth = 60, Bth = 110, shortage of the sheath liquid can be detected.

Upon detection of an image determined to be short of sheath liquid, the image or the determination result is stored and the abnormality determination process for the image is terminated (step 405). At the time the particle classification process and the abnormality determination process are completed for all images of one sample, the number of images determined to be insufficient of sheath liquid is counted (step 406). If the number of images determined as abnormal images is equal to or larger than a specified number, or if the ratio of the images determined as abnormal images to all of the images obtained from the sample is equal to or larger than a specified value, the sample is determined to have been measured in a state in which the amount of sheath liquid is insufficient (step 407). In the present embodiment, for instance, when the ratio of the images determined as abnormal images to all of the images is 50% or higher, the amount of sheath liquid is determined to be insufficient.

When the abnormality judgment process unit judges that the amount of the sheath liquid is insufficient, the apparatus outputs an alarm to alert the operator for confirmation etc., and registers a flag that indicates the sample is short of sheath liquid in the result of the sample (step 408). When the alarm that indicates the shortage of the sheath liquid is successively detected for a plurality of samples (step 409), there is a high possibility that an abnormality has occurred in the hardware or the like, and the need for stopping the apparatus is determined (step 410). When the alarm is successively detected for a specified number of times or more, the apparatus is stopped (step 411) so that loss of the samples and reagents can be prevented. When the sample is not determined to be short of sheath liquid, the measurement result is output (step 412).

The density values, the number of images, and other constant numbers used for abnormality determination in the aforementioned embodiments are not limited to the values or numbers described therein, but are such that are optimized according to the factors of a system, such as the gradation of acquired images, the number of the images obtained from one sample, and characteristics of the staining solution used.

In addition, an operator or a service man can confirm an abnormal state on the basis of an image by displaying the image determined abnormal which is stored in the storage unit.

### Description of Reference Numerals

- 1: Staining solution
- 2: Sample
- 3: Sample nozzle
- 4: Staining solution tank
- 5: Direct sample nozzle
- 6: Direct sample mechanism
- 7: Sheath liquid container
- 8: Sheath liquid
- 9: Syringe mechanism
- 10: Flow cell
- 12: Stained sample
- 13: Staining solution pump
- 14: Test tube
- 101: Laser light source
- 102: Scattered light
- 103: Particle detector
- 104: Flash lamp
- 105: Light flux
- 106: Microscope condenser lens
- 107: Microscope objective lens
- 108: Particle detection region
- 109: Imaging unit
- 110: Captured image

## Claims

1. A particle image analysis apparatus for a flow type particle analyzer comprising:
a particle classification processing unit (110b) that is configured to process images (110) of a liquid sample (12) containing particles to classify and count the particles to be measured;
an image processing unit (110a) that is configured to extract image signals of red, green, and blue from a background region of the image (110), the background region being a region that does not include the part of the particles to be measured;
an image abnormality determining unit (110c) that is configured to perform an abnormality determination process on each of the images (110) according to at least one of the image signals of red, green, and blue;
a controller that is configured to control the image abnormality determining unit (110c) and the particle classification processing unit (110b);
a storage unit that is configured to store an image determined as an abnormality by the image abnormality determining unit (110c) or a result of the abnormality determination; and
an abnormality judging unit that is configured to judge, according to statistics of the image stored in the storage unit, at least one of a shortage of the sample (12), a shortage of a staining solution (1), a shortage of a sheath liquid (8), and existence of an abnormality in the particle image analysis apparatus,
**characterized in that**
the image processing unit (110a) is configured to extract a histogram of at least one of the image signals of red, green, and blue,
the image abnormality determining unit (110c) is configured to determine, when a peak is detected in a specified region of the histogram of an image, that an air bubble exists in the image and to store the image or a result of the determination in the storage unit, and
the abnormality judging unit is configured to judge that the amount of the sample (12) is insufficient for a measurement, when the number of images or the number of determination results stored in the storage unit is equal to or larger than a specified number, or when the ratio of the number of the images stored in the storage unit to the number of all images obtained by imaging the sample (12) is equal to or larger than a specified value.

2. The particle image analysis apparatus according to claim 1, wherein
the image processing unit is configured to calculate most frequent density values Rp, Gp, Bp of the image signals of red, green, and blue, and
the image abnormality determining unit (110c) is configured to use the calculated most frequent density values and a preset discriminant function to determine whether or not the image is short of the staining solution (1), and to store the image which shortage of the staining solution (1) is detected into the storage unit.

3. The particle image analysis apparatus according to claim 2, wherein the abnormality judging unit is configured to judge that the amount of the staining solution (1) added to the sample (12) is insufficient, when the number of images stored in the storage unit is equal to or larger than a specified number, or when the ratio of the number of the images stored in the storage unit to the number of all images obtained by imaging the sample (12) is equal to or larger than a specified value.

4. The particle image analysis apparatus according to claim 1, wherein
the particle image analysis apparatus has preset image signal data of red, green, and blue acquired in a normal measurement,
the image processing unit (110a) is configured to calculate most frequent density values Rp, Gp, Bp of the image signals of red, green and blue obtained from a measured image, and
the image abnormality determining unit (110c) is configured to determine that the amount of the sheath liquid (8) is insufficient and to store the image or the determination result into the storage unit, when at least one of the most frequent density value Rp or Gp is out of a data range obtained in the normal measurement, and when the most frequent density value Bp is in a data range obtained in the normal measurement.

5. The particle image analysis apparatus according to claim 4, wherein the abnormality judging unit is configured to judge that the amount of the sheath liquid (8) added to the sample (12) is insufficient, when the number of images or the number of determination results stored in the storage unit, is equal to or larger than a specified number, or when the ratio of the number of the images stored in the storage unit to the number of all images obtained by imaging the sample (12) is equal to or larger than a specified value.

6. The particle image analysis apparatus according to any of claims 1, 3 and 5, further comprising
informing means for informing an operator of insufficiency in the amount of the sample (12), the staining solution (1), or the sheath liquid (8), when the abnormality judging unit judges that any of the insufficiency is occurring.

7. The particle image analysis apparatus according to claim 6, wherein, when the sample (12) in which at least one of the insufficiency in the amount of the sample (12), the staining solution (1), and the sheath liquid (8) is successively detected for a specified number of times or more, the particle measurement apparatus is determined to have an abnormality and the apparatus is stopped.

8. The particle image analysis apparatus according to claim 6 or 7, further comprising:
display means that is configured to be used to confirm the images (110) having an abnormality.

## Patentansprüche

1. Teilchenbildanalysegerät für einen Strömungstyp-Teilchenanalysator, mit
einer Teilchenklassifikations-Verarbeitungseinheit (110b), die dazu konfiguriert ist, Bilder (110) einer flüssigen Probe (12), die Teilchen enthält, zu verarbeiten, um diese zu klassifizieren und die zu messenden Teilchen zu zählen,
einer Bildverarbeitungseinheit (110a), die dazu konfiguriert ist, rote, grüne und blaue Bildsignale aus einer Hintergrundregion des Bilds (110) zu extrahieren, wobei die Hintergrundregion eine Region ist, die den Teil der zu messenden Teilchen nicht enthält,
einer Bildabnormitätsfeststellungseinheit (110c), die dazu konfiguriert ist, eine Abnormitätsfeststellungsverarbeitung an jedem der Bilder (110) gemäß wenigstens einem der roten, grünen und blauen Bildsignale durchzuführen,
einer Steuereinheit, die dazu konfiguriert ist, die Bildabnormitätsfeststellungseinheit (110c) und die Teilchenklassifikations-Verarbeitungseinheit (110b) zu steuern,
einer Speichereinheit, die dazu konfiguriert ist, ein Bild zu speichern, das durch die Bildabnormitätsfeststellungseinheit (110c) oder ein Ergebnis der Abnormitätsfeststellung als eine Abnormität festgestellt wurde, und
einer Abnormitätsbeurteilungseinheit, die dazu konfiguriert ist, gemäß Statistiken des in der Speichereinheit gespeicherten Bilds einen Mangel an Probe (12), einen Mangel an Farblösung (1), einen Mangel an Mantelflüssigkeit (8) und/oder die Existenz einer Abnormität in dem Teilchenbild-Analysegerät zu beurteilen,
**dadurch gekennzeichnet, dass**
die Bildverarbeitungseinheit (110a) dazu konfiguriert ist, ein Histogramm von wenigstens einem der roten, grünen und blauen Bildsignale zu extrahieren,
die Bildabnormitätsfeststellungseinheit (110c) dazu konfiguriert ist festzustellen, wenn ein Peak in einer spezifizierten Region des Histogramms eines Bilds erfasst wird, dass eine Luftblase in dem Bild existiert, und das Bild oder ein Ergebnis der Feststellung in der Speichereinheit zu speichern, und
die Abnormitätsbeurteilungseinheit dazu konfiguriert ist zu beurteilen, dass die Menge der Probe (12) nicht ausreichend für eine Messung ist, wenn die in der Speichereinheit gespeicherte Anzahl von Bildern oder die Anzahl von Feststellungsergebnissen mindestens so groß ist wie eine spezifizierte Zahl, oder wenn das Verhältnis der in der Speichereinheit gespeicherten Anzahl von Bildern zu der Anzahl aller durch Abbilden der Probe (12) erhaltenen Bilder mindestens so groß ist wie ein spezifizierter Wert.

2. Teilchenbildanalysegerät nach Anspruch 1, wobei
die Bildverarbeitungseinheit dazu konfiguriert ist, die häufigsten Dichtewerte Rp, Gp, Bp der roten, grünen und blauen Bildsignale zu berechnen, und
die Bildabnormitätsfeststellungseinheit (110c) dazu konfiguriert ist, die berechneten häufigsten Dichtewerte und eine voreingestellte Unterscheidungsfunktion zu verwenden um festzustellen, ob in dem Bild ein Mangel an Farblösung (1) vorliegt oder nicht, und das Bild in der Speichereinheit zu speichern, für das der Mangel an Farblösung (1) erfasst wurde.

3. Teilchenbildanalysegerät nach Anspruch 2, wobei die Abnormitätsbeurteilungseinheit dazu konfiguriert ist zu beurteilen, dass die Menge an der Probe (12) hinzugefügter Farblösung (1) nicht ausreichend ist, wenn die in der Speichereinheit gespeicherte Anzahl von Bildern mindestens so groß ist wie eine spezifizierte Zahl, oder wenn das Verhältnis der Anzahl von in der Speichereinheit gespeicherten Bildern zu der Anzahl aller Bilder, die durch Abbilden der Probe (12) erhalten wurden, mindestens so groß ist wie ein spezifizierter Wert.

4. Teilchenbildanalysegerät nach Anspruch 1, wobei
das Teilchenbildanalysegerät voreingestellte rote, grüne und blaue Bildsignaldaten hat, die in einer normalen Messung erhalten wurden,
die Bildverarbeitungseinheit (110a) dazu konfiguriert ist, häufigste Dichtewerte Rp, Gp, Bp der roten, grünen und blauen Bildsignale zu berechnen, die aus einem Messbild erhalten wurden, und
die Bildabnormitätsfeststellungseinheit (110c) dazu konfiguriert ist festzustellen, dass die Menge an Mantelflüssigkeit (8) nicht ausreichend ist, und das Bild oder das Feststellungsergebnis in die Speichereinheit zu speichern, wenn wenigstens die häufigsten Dichtewerte Rp oder Gp außerhalb eines Datenbereichs liegen, der in der normalen Messung erhalten wurde, und wenn der häufigste Dichtewert Bp in einem Datenbereich liegt, der in der normalen Messung erhalten wurde.

5. Teilchenbildanalysegerät nach Anspruch 4, wobei die Abnormitätsbeurteilungseinheit dazu konfiguriert ist zu beurteilen, dass die der Probe (12) hinzugefügte Menge an Mantelflüssigkeit (8) nicht ausreichend ist, wenn die in der Speichereinheit gespeicherte Anzahl von Bildern oder die Anzahl von Feststellungsergebnissen mindestens so groß ist wie eine spezifizierte Zahl, oder wenn das Verhältnis der Anzahl der in der Speichereinheit gespeicherten Bilder zu der Anzahl aller Bilder, die durch Abbilden der Probe (12) erhalten wurden, mindestens so groß ist wie ein spezifizierter Wert.

6. Teilchenbildanalysegerät nach einem der Ansprüche 1, 3 und 5, ferner mit
einer Informationseinrichtung zum Informieren eines Betriebspersonals über die unzureichende Menge an Probe (12), Farblösung (1) oder Mantelflüssigkeit (8), wenn die Abnormitätsbeurteilungseinheit beurteilt, dass für eine ein Mangel auftritt.

7. Teilchenbildanalysegerät nach Anspruch 6, wobei, wenn die Probe (12), für die eine nicht ausreichende Menge der Probe (12), der Farblösung (1) und/oder der Mantelflüssigkeit (8) nacheinander für eine spezifizierte Anzahl von Malen erfasst wurde, für das Teilchenmessgerät eine Abnormität festgestellt wird und das Gerät gestoppt wird.

8. Teilchenbildanalysegerät nach Anspruch 6 oder 7, ferner mit
einer Anzeigeeinrichtung, die dazu konfiguriert ist, für die Bestätigung der Bilder (110) mit einer Abnormität verwendet zu werden.

## Revendications

1. Appareil d'analyse d'images de particules pour un analyseur de particules de type à flux continu comprenant :
une unité (110b) de traitement de classement de particules qui est configurée pour traiter des images (110) d'un échantillon liquide (12) contenant des particules pour classer et compter les particules devant être mesurées ;
une unité (110a) de traitement d'images qui est configurée pour extraire des signaux d'images de rouge, vert, et bleu d'une région de fond de l'image (110), la région de fond étant une région qui n'inclut pas la partie des particules devant être mesurées ;
une unité (110c) de détermination d'anomalies d'images qui est configurée pour exécuter un processus de détermination d'anomalies sur chacune des images (110) en fonction d'au moins un des signaux d'images de rouge, vert, et bleu ;
un contrôleur qui est configuré pour commander l'unité (110c) de détermination d'anomalies d'images et l'unité (110b) de traitement de classement de particules ;
une unité de stockage qui est configurée pour stocker une image déterminée comme une anomalie par l'unité (110c) de détermination d'anomalies d'images ou un résultat de la détermination d'anomalies ; et
une unité de jugement d'anomalies qui est configurée pour juger, en fonction de statistiques de l'image stockée dans l'unité de stockage, au moins un(e) parmi un déficit de l'échantillon (12), un déficit d'une solution de coloration (1), un déficit d'un liquide de gaine (8), et une existence d'une anomalie dans l'appareil d'analyse d'images de particules,
**caractérisé en ce que**
l'unité (110a) de traitement d'images est configurée pour extraire un histogramme d'au moins un des signaux d'images de rouge, vert, et bleu,
l'unité (110c) de détermination d'anomalies d'images est configurée pour déterminer, lorsqu'un pic est détecté dans une région spécifique de l'histogramme d'une image, qu'une bulle d'air existe dans l'image et pour stocker l'image ou un résultat de la détermination dans l'unité de stockage, et
l'unité de jugement d'anomalies est configurée pour juger que la quantité de l'échantillon (12) est insuffisante pour une mesure, lorsque le nombre d'images ou le nombre de résultats de détermination stocké(e)s dans l'unité de stockage est égal ou supérieur à un nombre spécifié, ou lorsque le rapport du nombre des images stockées dans l'unité de stockage sur le nombre de toutes les images obtenues en imageant l'échantillon (12) est égal ou supérieur à une valeur spécifiée.

2. Appareil d'analyse d'images de particules selon la revendication 1, dans lequel
l'unité de traitement d'images est configurée pour calculer des valeurs de densité Rp, Vp, Bp les plus fréquentes des signaux d'images de rouge, vert, et bleu, et
l'unité (110c) de détermination d'anomalies d'images est configurée pour utiliser les valeurs de densité les plus fréquentes calculées et une fonction discriminante prédéfinie pour déterminer si l'image manque ou non de la solution de coloration (1), et pour stocker l'image dont le déficit de la solution de coloration (1) est détecté dans l'unité de stockage.

3. Appareil d'analyse d'images de particules selon la revendication 2, dans lequel l'unité de jugement d'anomalies est configurée pour juger que la quantité de la solution de coloration (1) ajoutée à l'échantillon (12) est insuffisante, lorsque le nombre d'images stockées dans l'unité de stockage est égal ou supérieur à un nombre spécifié, ou lorsque le rapport du nombre des images stockées dans l'unité de stockage sur le nombre de toutes les images obtenues en imageant l'échantillon (12) est égal ou supérieur à une valeur spécifiée.

4. Appareil d'analyse d'images de particules selon la revendication 1, dans lequel
l'appareil d'analyse d'images de particules a des données de signaux d'images de rouge, vert, et bleu prédéfinies acquises lors d'une mesure normale,
l'unité (110a) de traitement d'images est configurée pour calculer des valeurs de densité Rp, Vp, Bp les plus fréquentes des signaux d'images de rouge, vert, et bleu obtenues à partir d'une image mesurée, et
l'unité (110c) de détermination d'anomalies d'images est configurée pour juger que la quantité du liquide de gaine (8) est insuffisante et pour stocker l'image ou le résultat de détermination dans l'unité de stockage, lorsqu'au moins une des valeurs de densité Rp ou Vp les plus fréquentes est hors d'une plage de données obtenue lors de la mesure normale, et lorsque la valeur de densité Bp la plus fréquente est dans une plage de données obtenue lors de la mesure normale.

5. Appareil d'analyse d'images de particules selon la revendication 4, dans lequel l'unité de jugement d'anomalies est configurée pour juger que la quantité du liquide de gaine (8) ajouté à l'échantillon (12) est insuffisante, lorsque le nombre d'images ou le nombre de résultats de détermination stocké(e)s dans l'unité de stockage est égal ou supérieur à un nombre spécifié, ou lorsque le rapport du nombre des images stockées dans l'unité de stockage sur le nombre de toutes les images obtenues en imageant l'échantillon (12) est égal ou supérieur à une valeur spécifiée.

6. Appareil d'analyse d'images de particules selon l'une quelconque des revendications 1, 3 et 5, comprenant en outre
un moyen d'information pour informer un opérateur d'une insuffisance de la quantité de l'échantillon (12), de la solution de coloration (1), ou du liquide de gaine (8), lorsque l'unité de jugement d'anomalies juge que l'une quelconque des insuffisances survient.

7. Appareil d'analyse d'images de particules selon la revendication 6, dans lequel, lorsque l'échantillon (12) dans lequel au moins une des insuffisances de la quantité de l'échantillon (12), de la solution de coloration (1), et du liquide de gaine (8) est successivement détectée un nombre spécifié de fois ou plus, l'appareil de mesure de particules est déterminé avoir une anomalie et l'appareil est stoppé.

8. Appareil d'analyse d'images de particules selon la revendication 6 ou 7, comprenant en outre :
un moyen d'affichage qui est configuré pour être utilisé pour confirmer les images (110) ayant une anomalie.
